(19) **Europäisches Patentamt / European Patent Office / Office européen des brevets**

(11) **EP 3 794 072 B1**

(12) # EUROPEAN PATENT SPECIFICATION

(45) Date of publication and mention
of the grant of the patent:
**06.07.2022 Bulletin 2022/27**

(21) Application number: **19722155.9**

(22) Date of filing: **10.05.2019**

(51) International Patent Classification (IPC):
**C08L 67/04** (2006.01)   **B29C 64/106** (2017.01)
**B29C 64/118** (2017.01)   **B33Y 70/00** (2020.01)

(52) Cooperative Patent Classification (CPC):
(C-Sets available)
**B33Y 70/00; B29C 64/118; C08L 67/04**     (Cont.)

(86) International application number:
**PCT/EP2019/062096**

(87) International publication number:
**WO 2019/219546 (21.11.2019 Gazette 2019/47)**

(54) **A POLYLACTIC ACID COMPOSITION**

POLYMILCHSÄUREZUSAMMENSETZUNG

COMPOSITION D'ACIDE POLYLACTIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.05.2018 EP 18172524**

(43) Date of publication of application:
**24.03.2021 Bulletin 2021/12**

(73) Proprietor: **BYK-Chemie GmbH
46483 Wesel (DE)**

(72) Inventors:
• **PIESTERT, Frederik**
 **46483 Wesel (DE)**
• **REINELT, Sebastian**
 **46483 Wesel (DE)**
• **DIEHL, Anna-Maria**
 **46483 Wesel (DE)**
• **BRÜNE, Anette**
 **46483 Wesel (DE)**
• **KRÖLLER, Thorsten**
 **46483 Wesel (DE)**

(74) Representative: **Altana IP Department
Altana Management Services GmbH
Abelstraße 45
46483 Wesel (DE)**

(56) References cited:
**WO-A1-2015/069986     US-A1- 2010 266 858**

• **COPPOLA B ET AL: "Layered silicate reinforced
polylactic acid filaments for 3D printing of
polymer nanocomposites", 2017 IEEE 3RD
INTERNATIONAL FORUM ON RESEARCH AND
TECHNOLOGIES FOR SOCIETY AND INDUSTRY
(RTSI), IEEE, 11 September 2017 (2017-09-11),
pages 1-4, XP033163161, DOI:
10.1109/RTSI.2017.8065892 cited in the
application**
• **L. PETERSSON ET AL: "Using maleic anhydride
grafted poly(lactic acid) as a compatibilizer in
poly(lactic acid)/layered-silicate
nanocomposites", JOURNAL OF APPLIED
POLYMER SCIENCE, vol. 102, no. 2, 1 January
2006 (2006-01-01), pages 1852-1862,
XP055516067, ISSN: 0021-8995, DOI:
10.1002/app.24121 cited in the application**

(52) Cooperative Patent Classification (CPC): (Cont.)

C-Sets
**C08L 67/04, C08K 3/34, C08L 51/08**

**Description**

**Field of the invention**

The invention relates to a polylactic acid composition comprising polylactic acid, mineral silicate compound and polylactic acid grafted with an acid- and/or acid anhydride-functional ethylenically unsaturated polymerizable monomer. The invention further relates to a use of the polylactic acid composition according to the present invention as a building material in additive manufacturing of three-dimensional shaped objects. The invention further relates to a three-dimensional shaped object prepared by additive manufacturing from said polylactic acid composition.

**Background of the invention**

Fused Filament Fabrication (FFF) belongs to the group of additive manufacturing processes (also referred to as 3D printing processes). Fused Filament Fabrication is used to prepare a three-dimensional shaped object by depositing a melt of a composition in a layered manner to form said three-dimensional shaped object. Each layer is at least partially supported by another layer of the shaped object or, in case necessary, is at least partially supported by an additional supporting structure.

A filament for preparing a three-dimensional shaped object may comprise a composition comprising a polylactic acid as a main ingredient.

A three-dimensional object shaped by 3D printing using a polylactic acid (PLA) composition may suffer from oozing, warping, dimensional or shape stability and surface defects due to the layered manner to form said three-dimensional shaped object. Especially, the surface defects of the three-dimensional object become worse in case of a decreasing overhang angle of a surface of the three-dimensional object. A decreasing overhang angle is a decreasing angle of an overhang surface with respect to a horizontal direction (i.e. the overhang surface approaches a horizontal direction).

These surface defects need to be removed from the three-dimensional object after the additive manufacturing process. A removal of the surface defects demands additional and elaborate manual labor. Depending on the overall geometry of the object, the three-dimensional shaped object can even not be printed for some geometries.

In conference paper 2017 IEEE 3rd International Forum on Research and Technologies for Society and Industry - Innovation to Shape the Future for Society and Industry (RTSI) of B. Coppola et al. (published September 2017) it is disclosed to use layered silicate reinforced polylactic acid filaments for 3D printing of polymer nanocomposites. In particular Cloisite 30B, which is an organically modified montmorillonite, was used as nanoclay filler for a semicrystalline polylactic acid. In the conference paper it was disclosed that the crystallinity of the polylactic acid composition increased in the presence of the nanoclay.

In Journal of Applied Polymer Science (2006), 102(2), 1852 - 1862 a use of a maleic anhydride grafted poly(lactic acid) is disclosed as compatibilizer in nanocomposites of poly(lactic acid) and a bentonite layered silicate or a hectorite layered silicate. The nanocomposites were prepared by incorporation of 5 wt% of the layered silicate into poly(lactic acid) via solution casting.

**Summary of the invention**

It is known that a polylactic acid composition may provide suitable mechanical properties to a three-dimensional object, such as in case the three-dimensional object is formed by conventional molding processes, such as injection molding processes.

However, it has surprisingly been found by the inventors that in case of using additive manufacturing to form said three-dimensional shaped object from a polylactic acid composition, said three-dimensional shaped object may have considerable inferior mechanical properties compared to the three-dimensional object shaped by injection molding. In particular, a tensile strength of the resulting three-dimensional shaped object may be inferior in case of using additive manufacturing.

The invention aims to provide a polylactic acid composition usable for an additive manufacturing process wherein the surface defects of the three-dimensional shaped object are prevented or at least reduced.

In exemplary embodiments, the invention aims to provide a polylactic acid composition wherein a mechanical property of an object obtained from said polylactic acid composition, such as a three-dimensional shaped object obtained using an additive manufacturing process, is improved.

The invention provides a polylactic acid composition comprising:

i) polylactic acid,
ii) mineral silicate compound, and

iii) polylactic acid grafted with an acid- and/or acid anhydride-functional ethylenically unsaturated polymerizable monomer,

wherein the composition comprises at least 7.5% by weight of the mineral silicate compound component ii), wherein the % by weight is calculated on the sum of i), ii) and iii).

In another aspect of the invention a use is provided of a polylactic acid composition according to the present invention as a building material in additive manufacturing of three-dimensional shaped objects.

In another aspect of the invention a three-dimensional shaped object is provided prepared from a polylactic acid composition according to the present invention.

The polylactic acid composition according to the invention enhances surface quality of the three-dimensional shaped object, which is prepared by an additive manufacturing process. The composition comprises at least 7.5 % by weight of the mineral silicate compound component ii), wherein the % by weight is calculated on the sum of i), ii) and iii).

In particular, due to the amount of the mineral silicate compound component ii) the surface defects of the three-dimensional shaped object are prevented or reduced at a decreasing overhang angle. As a result, an overhang surface, which has a small surface overhang angle, may be obtained from the additive manufacturing process without surface defects being present.

The polylactic acid composition according to the present invention additionally comprises at least 7.5 % by weight of the mineral silicate compound (component ii) and a polylactic acid grafted with an acid- and/or acid anhydride-functional ethylenically unsaturated polymerizable monomer (component iii). The addition of the combination of the mineral silicate compound (component ii) and the grafted polylactic acid (component iii) to the polylactic acid (component i) provides an enhanced surface quality of the three-dimensional shaped object for an overhang surface.

Especially, the attainable range of overhang angles of the overhang surface is increased, which overhang surface is substantially free of surface defects, at the same processing conditions. In particular, a minimum overhang angle for depositing the layers of the polylactic acid composition, above which substantially no surface defects occur, is reduced.

Additionally, in exemplary embodiments, the attainable processing temperature range for depositing the layers of the polylactic acid composition may be enlarged by the composition of the invention, without surface defects occurring at the overhang surfaces. In particular, a minimum processing temperature for depositing the layers of the polylactic acid composition, above which a sufficient surface quality is attained, is reduced.

Additionally, in exemplary embodiments, the attainable printing speed range for depositing the layers of the polylactic acid composition may be enlarged by the composition of the invention, without surface defects occurring at the overhang surfaces. In particular, a maximum printing speed for depositing the layers of the polylactic acid composition, below which a sufficient surface quality is attained, is increased.

Additionally, it has been found that mechanical properties, such as flexural properties and/or tensile properties, may be improved for three-dimensional shaped objects by using the composition according to the invention having at least 7.5% by weight of the mineral silicate compound (component ii) for preparing three-dimensional shaped objects by applying additive manufacturing processes (such as fused filament fabrication).

The three-dimensional shaped object according to the invention may be prepared by additive manufacturing, such as fused filament fabrication, may be prepared by injection molding and may be prepared in any other way.

Component i) is polylactic acid (PLA). It is provided in an amount of 40.0 to 91.5 % by weight, calculated on the sum of components i) to iii). Preferably, polylactic acid is provided in an amount that it forms a continuous phase in the polymer blend. This is generally achieved when polylactic acid is provided in a higher weight proportion than the component ii) and iii). In preferred embodiments, polylactic acid is provided in an amount of at least 50.0 % by weight, more preferably at least 60.0 % by weight, calculated on the sum of components i) to iii). The polylactic acid may be crystalline or partly crystalline, L or D or mixtures thereof, capped or uncapped or a blend thereof.

The polylactic acid is preferably provided as a granulate. In a preferred embodiment, the polylactic acid has a melt flow rate in the range of 5 to 200 g/10min at 210°C/2.16 kg.

Component ii) is a mineral silicate compound. Said mineral silicate compound comprises at least one mineral silicate component. A mineral silicate component according to the present invention is a mineral comprising silicate groups. This component is preferably provided in an amount of 7.5% to 20.0% by weight, calculated on the sum of components i) to iii).

In a particular embodiment, the composition comprises at most 20.0% by weight of the mineral silicate compound component ii), wherein the % by weight is calculated on the sum of i), ii) and iii).

Mineral silicate components may be classified based on the structure of their silicate groups, which contain different ratios of silicon and oxygen. Known classes of mineral silicate components are nesosilicates, sorosilicates, cyclosilicates, phyllosilicates and tectosilicates. Preferably, the mineral silicate component is a phyllosilicate. A phyllosilicate is a sheet silicate, which comprises parallel sheets of silicate tetrahedra with $Si_2O_5$ or a 2:5 ratio. Phyllosilicate minerals are typically hydrated, with either water or hydroxyl groups attached.

In exemplary embodiments, the phyllosilicate is a component selected from the group consisting of serpentine subgroup, clay minerals group, mica group and chlorite group. Preferably, the phyllosilicate is a component from the clay minerals group.

Clay minerals can be classified as 1:1 or 2:1, this originates because they are fundamentally built of tetrahedral silicate sheets and octahedral hydroxide sheets. A 1:1 clay would consist of one tetrahedral sheet and one octahedral sheet, and examples would be kaolinite and serpentine. A 2:1 clay consists of an octahedral sheet sandwiched between two tetrahedral sheets, and examples are talc, vermiculite and montmorillonite.

In exemplary embodiments, the component from clay minerals group comprises is selected from the group consisting of smectite, halloysite, kaolinite, Illite, montmorillonite, vermiculite, talc, sepiolite, palygorskite (or attapulgite) and pyrophyllite.

In particular embodiments, said mineral silicate compound is a mixture of at least two mineral silicate components.

Said component iii) grafted polylactic acid (grafted PLA) may be any polylactic acid which is grafted with at least an acid- and/or acid anhydride-functional ethylenically unsaturated polymerizable monomer. This component is preferably provided in an amount of 1.0 to 40.0% by weight, calculated on the sum of components i) to iii).

There are no particular limitations with respect to the selection of the polylactic acid for grafting. The polylactic acid may be crystalline or partly crystalline, L or D or mixtures thereof, capped or uncapped or a blend.

The polylactic acid for grafting is preferably provided as a powder. In a preferred embodiment, the polylactic acid used for grafting has a melt flow rate in the range of 5 to 200 g/10min at 210°C/2.16 kg.

In an exemplary embodiment, component iii) comprises polylactic acid grafted with one or more of maleic anhydride, maleic acid, maleic acid monoester, itaconic anhydride, itaconic acid, citraconic anhydride, citraconic acid, acrylic acid, methacrylic acid, and fumaric acid. Examples of suitable carboxylic acid or carboxylic anhydride functional monomers for grafting the polylactic acid are ethylenically unsaturated polymerizable monomers having an carboxylic acid or carboxylic anhydride functional group, such as acrylic or methacrylic acid, maleic anhydride, maleic acid, fumaric acid, itaconic acid or itaconic anhydride, and citraconic acid, citraconic anhydride. In a preferred embodiment, component iii) contains 0.1 to 8.0 % by weight of grafted carboxylic acid or anhydride functional monomer, calculated on the weight of component iii). It is further preferred that component iii) contains up to 5 % by weight of grafted carboxylic acid or anhydride functional monomer, for example 0.5 to 2 % by weight, always calculated on the weight of component iii).

In a further preferred embodiment, the grafted polylactic acid of component iii) is grafted with a mixture of monomers comprising said at least an acid- and/or acid anhydride-functional ethylenically unsaturated polymerizable monomer and at least one ethylenically unsaturated polymerizable comonomer without an acid functional group and without an acid anhydride-functional group. Said at least one ethylenically unsaturated polymerizable comonomer without an acid functional group and without an acid anhydride-functional group can be selected from the group of vinyl aromatics, ester of acrylic acid and ester of methacrylic acid. Preferably, said at least one ethylenically unsaturated polymerizable comonomer is selected from the group consisting of styrene, a $C_1$-$C_{12}$-alkyl ester of acrylic acid, such as methyl acrylate, ethyl acrylate and butyl acrylate, a $C_1$-$C_{12}$-alkyl ester of methacrylic acid, such as methyl methacrylate, and combinations thereof.

The grafting step for preparing component iii) is suitably carried out in the presence of radical generating agents, such as organic peroxides and azo compounds. Radical generating agents having a one hour half-life temperature ($T_{H/1h}$) in the range of 55 to 150 °C are preferred. Suitable examples are dialkyl peroxidicarbonates, such as dibutyl peroxidicarbonate and dicetylperoxidicarbonate ($T_{H/1h}$ = 65 °C); dilaurylperoxide ($T_{H/1h}$ = 80 °C); dibenzoylperoxide ($T_{H/1h}$ = 91 °C); tert.-butylperoxy2-ethyl hexanoate ($T_{H/1h}$= 91 °C); tert.-butylperoxy-isobutyrate ($T_{H/1h}$ = 98 °C); 1,1-di(tert.-butylperoxy)-cyclohexane ($T_{H/1h}$ = 113 °C), tert.-butylperbenzoate ($T_{H/1h}$ = 122°C); dicumylperoxide ($T_{H/1h}$ = 132 °C); 2,5-dimethyl-2,5-di(tert.-butylperoxy)-hexane ($T_{H/1h}$ = 134 °C); 2,5-dimethyl-2,5-di(tert.-butylperoxy)hexin-(3) ($T_{H/1h}$ = 141 °C); and di-tert.-butylperoxide ($T_{H/1h}$ = 141 °C).

The grafting step for preparing component iii) is preferably carried out in the solid phase below the softening or melting temperature of the polylactic acid. An advantage of the solid phase reaction is the possibility to achieve a very low content of residual monomers, for example 0.001 % by weight or less of residual monomer, calculated on the weight of the grafted polylactic acid.

Component iii) preferably has a melt volume rate in the range of 1 to 150 cm$^3$/10 min at a temperature of 210 °C/2.16kg.

Generally, the ratio of component ii), mineral silicate compound, to component iii), grafted PLA, is from 7:1 to 1:4, preferably from 3:1 to 1:3, more preferably from 2.5:1 to 1:2.5, even more preferably from 2:1 to 1:2

The step of providing the composition may comprise a step of mixing components i) to iii) at elevated temperature in the range of 150 to 260 °C. Suitable equipment for mixing and blending polymers at elevated temperature known to the skilled person can be used for the process of the invention. In a preferred embodiment, the process of mixing the components is carried out in an twin screw extruder.

In an exemplary embodiment, the mineral silicate compound comprises an organically modified layered silicate.

The organically modified layered silicate may be any phyllosilicate, which is organically modified. The organically modification may be selected to enhance a dispersability of the layered silicate in the polylactic acid component i).

In an exemplary embodiment, the organically modified layered silicate comprises a clay mineral modified with an organic compound selected from organic amines, salts of organic amines, quaternary ammonium compounds, and mixtures thereof.

In an exemplary embodiment, component ii) comprises a layered silicate and another mineral silicate, which has a shape selected from the group consisting of a needle shape and a spherical shape. The combination of a layered silicate and another mineral silicate, which has a shape selected from the group consisting of a needle shape and a spherical shape, and the addition of the component iii) may enhance a combination of mechanical properties. For example, both tensile strength and flexural strength of objects formed by additive printing may be enhanced by such a combination.

Additionally, the surface quality of printed objects and/or the dimensional stability of printed objects and/or the attainable processing temperature range and/or the attainable printing speed may be further improved by using a mineral silicate compound according to this embodiment.

In an exemplary embodiment, component ii) comprises a mixture of

iia) smectite and
iib) a mineral silicate selected from sepiolite, palygorskite, and mixtures thereof.

It has been found that the combination of the mixture of smectite and a mineral silicate, which is selected from sepiolite, palygorskite, and mixtures thereof, and a grafted PLA according to the present invention provides an improved surface quality of 3D printed objects and/or provides improved mechanical properties of 3D printed objects. A commercial example of such a mixture of smectite and a mineral silicate, which is selected from sepiolite, palygorskite, and mixtures thereof, is Garamite 1958.

In an exemplary embodiment, the composition comprises one or more further components selected from pigments, dyes, fillers, plasticizers, impact modifers, nucleation agents, flame retardants, anti-oxidants, UV-stabilizers, and processing aids. A selection of any of these further components may be suitably carried out by a skilled person in the art of additives for polylactic acid compositions and/or of fused filament fabrication applications.

In an exemplary embodiment, the composition comprises

i) 40.0 to 91.5 % by weight of polylactic acid
ii) 7.5% to 20.0% by weight of mineral silicate, and
iii) 1.0% to 40.0 % by weight of polylactic acid grafted with an acid- and/or acid anhydride-functional ethylenically unsaturated polymerizable monomer,

wherein the % by weight are calculated on the sum of i), ii) and iii).

In an exemplary embodiment, the composition comprises at least 8.0 % by weight of component ii), wherein the % by weight is calculated on the sum of i), ii) and iii).

The higher amount of the mineral silicate compound of at least 8.0 % by weight enhances at least one of surface quality and/or mechanical properties of objects formed by additive manufacturing.

In a preferred exemplary embodiment, the composition comprises at least 10.0 % by weight of component ii), wherein the % by weight is calculated on the sum of i), ii) and iii).

The higher amount of the mineral silicate compound of at least 10.0 % by weight enhances a surface quality of objects formed by additive manufacturing. In particular examples, the tensile strength of objects formed by additive manufacturing is improved.

In an exemplary embodiment, the composition comprises at least 15.0 % by weight of component iii), wherein the % by weight is calculated on the sum of i), ii) and iii).

The higher amount of the component iii) of at least 15.0 % by weight enhances at least one of surface quality and/or mechanical properties of objects formed by additive manufacturing.

In a preferred exemplary embodiment, the composition comprises at least 20.0 % by weight of component iii), wherein the % by weight is calculated on the sum of i), ii) and iii).

The higher amount of the component iii) of at least 20.0 % by weight further enhances at least one of surface quality and/or mechanical properties of objects formed by additive manufacturing. In particular examples, the tensile strength of objects formed by additive manufacturing is improved.

In a particular preferred exemplary embodiment, the composition comprises at least 30.0 % by weight of component iii),wherein the % by weight is calculated on the sum of i), ii) and iii). The higher amount of the component iii) of at least 30.0 % by weight further enhances at least one of surface quality and/or mechanical properties of objects formed by additive manufacturing. In particular examples, the tensile strength of objects formed by additive manufacturing is improved.

In an exemplary embodiment, the composition is provided as a filament.

## Examples

The examples below illustrate the invention without restrictive effect:

Table 1: Materials used (Reference, supplier and description)

| Materials | Supplier | Description |
|---|---|---|
| Ingeo 2003D | Natureworks LLC | Transparent general purpose Polylactic acid (PLA) extrusion grade. MFR: 6g/10 min [210 °C, 2.16 kg]) |
| Ingeo 4043D | Natureworks LLC | Multi-purpose Polylacticacid (PLA) extrusion grade results in 3D printing monofilament with excellent printability characteristics such as precise detail, good adhesion to build plates, less warping etc. (MFR: 6g / 10min [210 °C, 2.16 kg]) |
| Luzenac 1445 | Imerys Talc | Grey lamellar talc used to reinforce compounds where good mechanical and thermal properties are required |
| Garamite 1958 (GA) | BYK-Chemie GmbH | Powdered rheology additive based on a composition of organically modified phyllosilicates |
| German RepRap PLA Performance Plastic (1.75 mm- silk white) | German RepRap | Premium PLA-Filament which is partially biodegredable and made of bio-based raw materials |
| BYK-LP T 23370 | BYK-Chemie GmbH | rafted poly(lactic acid), Level of grafting: $\geq$ 1.0wt%; MVR (190 °C; 2.16 kg): $\geq$ 1 cm$^3$/10 min |

In the examples the application of example filaments according to the invention were tested and compared to comparative examples of filaments that have a known composition.

Several filaments of the present invention were prepared according to the general preparation method. Their processing properties for application in "Fused Filament Fabrication (FFF)" - 3D print processes were tested at several processing conditions (temperature and speed). The surface quality of 3D printed objects and especially the surface quality of overhang surfaces were tested using an overhang angle printing test.

The compositions of the filaments of the present invention were compared to the comparative examples of composition which are known (these are all marked with a star* in the examples), which were tested in the same way as the compositions of the present invention.

## General preparation method for preparing compositions and their filaments

The Ingeo 2003D and the Ingeo 4043D were dried for 4 hours at 80 °C in a granulate dryer before being used. The other components were dried using a common circulation oven for 4 hours at 80 °C. The components were supplied to the composition by using three different feeders. The component i) was supplied by a main feeder of the extruder (Coperion ZSK 18), which is connected to the extruder. The grafted PLA (component iii) is supplied by a moveable feeder through the main inlet of the extruder. The mineral silicate compound (component ii) is supplied by another moveable side feeder, which is connected to a side inlet of the extruder. The dosing speed of the component ii) is 60 - 500 rpm (depending on the type of component ii). E.g. Luzenac 1445: 200 rpm; Garamite 1958: 500 rpm).

The extrusion is performed using a temperature profile as given below and an extrusion speed of 300 rpm. The total output of the extruder is 2 kg/ hour at a workload of 30 - 40 %. The mixture of the components i) to iii), which is obtained from the extrusion process is let out of the extruder through two openings (each having a cross section of 2,0 mm x 2,0 mm) and is cooled in a cold water bath. The attached water is removed from the extrusion strands by using a water suction device. Additionally, the extrusion strand is granulated using a common granulator device.

The employed screw design / geometry is as follows (according to nomenclature of Coperion):

2xdics/1-8012-XX.04-001/001-12; 2x8/8-8018-XX.21-008/008-12; 2x24/24SK-8018-XX.22-024/024-12; 24/12SK-N-8018-XX.22-024/012-16; 2x24/24-8018-XX.21-024/024-12; KB45/5/16N-Dge-8018-XX.91-521/016-13; 2xKB45/5/16Dge-8017-05.37-405/016-13; KB45/5/16Dge-N-8018-XX.91-522/016-13; 16/8LI-8018-XX.51-016/008-12; 5x24/24-8018-XX.21-024/024-12; 2xKB45/5/8-8018-XX.26-405/008-12; KB90/5/8-8018-XX.26-905/008-12;

2xKB45/5/8-8018-XX.26-405/008-12; KB90/5/8-8018-XX.26-905/008-12; 2xKB45/5/8-8018-XX.26-405/008-12; KB45/5/8L1-8018-XX.56-405/008-12; 24/24-8018-XX.21-024/024-12; 24/12-8018-XX.21-024/012-12; disc/1-8012-XX.04-001/001-12; 2xZME6/11-8018-XX.92-369/011-75; disc/1-8012-XX.04-001/001-12; 3x24/24-8018-XX.21-024/024-12; disc/1-8012-XX.04-001/001-12; 2xZME6/11-8018-XX.92-369/011-75; disc/1-8012-XX.04-001/001-12; 24/012-8018-XX.21-024/012-12; KB90/5/16-8018-XX.26-905/016-12; 16/8-8018-XX.21-016/008-12; KB45/5/8-8018-XX.26-405/008-12; 16/8-8018-XX.21-016/008-12; 24/24-8018-XX.21-024/024-12; 16/16-8018-XX.21-016/016-12; 2xSME12/12-8018-XX.92-373/012-76; 2x16/16-8018-XX.21-016/016-12)

The granulate of the compound is dried for 4 hours at 80 °C. Then, the granulate is extruded using a filament-extruder (Supplied by 3Devo bv) to prepare a filament having 1.75 mm diameter. The filament is automatically winded on a filament spool. The extrusion is carried out using the temperature profile shown below and an extrusion speed of 2.8 rpm (for talc: 3.5 rpm).

The temperature profile is indicated starting at the main inlet of the twin screw extruder:

1) temperature profile (Extruder ZSK18 of supplier Coperion):
150 °C / 185 °C / 185 °C / 190 °C / 190 °C / 200 °C / 200 °C
2) temperature profile (filament extruder of supplier 3Devo):

    a. 170°C / 187°C / 173°C / 170°C (for Clay-based mineral compounds, such as Garamite 1958)
    b. 178°C / 191 °C / 188 °C / 178°C (for Talc-based mineral compounds, such as Luzenac 1445)

Table 2 indicates the composition of the filaments based on the comparison examples (1*, 2*, 3*, 4*, 5*, and 7*) and the filaments according to the invention (6 and 8).

Table 2: composition of the filaments 1 - 9

| Filament | Component i) [wt %] | Component i) | Component ii) [wt %] | Component ii) | Component iii) [wt %] | Component iii) |
|---|---|---|---|---|---|---|
| 1* | 100% | Ingeo 2003D | - | - | - | - |
| 2* | 100% | Ingeo 4043D | - | - | - | - |
| 3* | German RepRap PLA Performance Plastic - Silk White (1,75 mm Filament-diameter; Articel-Number: 100406) - Filament for 3D-printing | | | | | |
| 4* | 95.0% | Ingeo 2003D | 5.0% | Garam ite 1958 | - | - |
| 5* | 85.0% | Ingeo 2003D | 15.0% | Luzenac 1445 | - | - |
| 6 | 66.8% | Ingeo 2003D | 15.0% | Luzenac 1445 | 18.2% | BYK-LP T 23370 |
| 7* | 85.0% | Ingeo 2003D | 15.0% | Garam ite 1958 | - | - |
| 8 | 66.8% | Ingeo 2003D | 15.0% | Garam ite 1958 | 18.2% | BYK-LP T 23370 |

The examples marked with ,,*"are not part of the invention, but are used as comparison examples.

The filaments shown in Table 2 were processed using a filament 3D printing process and surface quality of the 3D printed objects and especially the surface quality of overhang surfaces were tested using an overhang angle printing test.

Several of the filaments (1*, 4*, 5*, 6, 7* and 8) shown in Table 2 were additionally tested on mechanical properties by preparing 3D printed test samples, which were tested using a standard Tensile Test method (See Table 6) or a standard Flexural Test (see Table 7).

Table 3 indicates the composition of the additional compounds based on the comparison examples (9*, 11*) and the compounds according to the invention (10, 12, 13, 14).

Table 3: composition of the filaments 10 - 15

| Compound | Component i) [wt %] | Component i) | Component ii) [wt%] | Component ii) | Component iii) [wt%] | Component iii) |
|---|---|---|---|---|---|---|
| 9* | 92.5% | Ingeo 2003D | 7.5% | Garamite 1958 | - | - |
| 10 | 77.5% | Ingeo 2003D | 7.5% | Garamite 1958 | 15.0% | BYK-LP T 23370 |
| 11* | 90.0% | Ingeo 2003D | 10.0% | Garamite 1958 | - | - |
| 12 | 70.0% | Ingeo 2003D | 10.0% | Garamite 1958 | 20.0% | BYK-LP T 23370 |
| 13 | 55.0% | Ingeo 2003D | 15.0% | Garamite 1958 | 30.0% | BYK-LP T 23370 |
| 14 | 55.0% | Ingeo 2003D | 15.0% | Luzenac 1445 | 30.0% | BYK-LP T 23370 |

The examples marked with ,,*"are not part of the invention, but are used as comparison examples.

The compounds shown in Table 3 were tested on mechanical properties using a standard Tensile Test method (see Table 6). Additionally, flexural properties were tested for Example 15 (see Table 7).

**Test object preparation of the overhang angle print test**

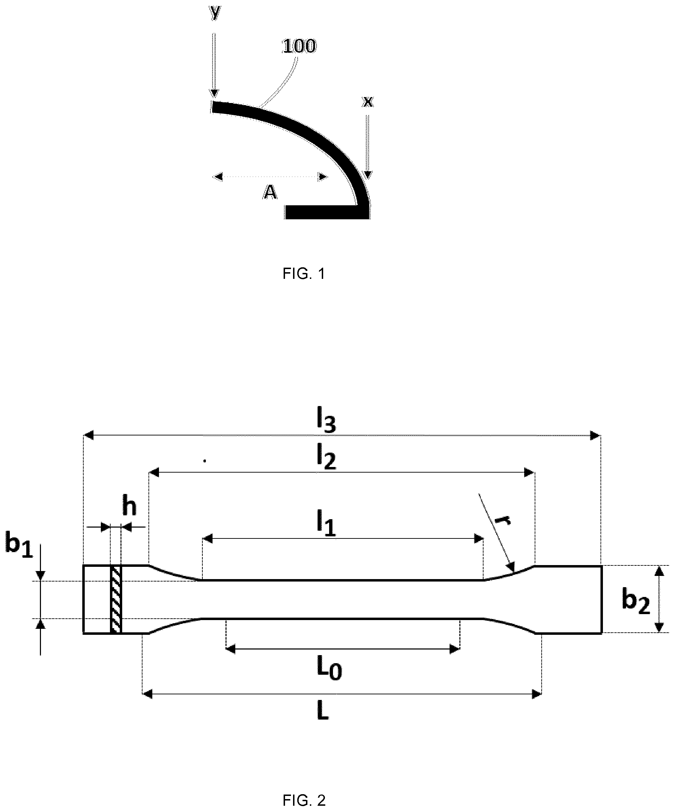

The printing test was carried out using a filament 3D printer Ultimaker 2+ supplied by the company Ultimaker B.V. (the Netherlands). For the overhang angle print test a conventional, available, digital design is used, such as is disclosed on platforms as Thingiverse. Typically, the Overhang test by AlvarezFra, published May 10, 2017 (see: www.thingiverse.com/thing:2308925) was used to obtain an overhang angle between 5° and 75°. A side view of the test sample 100 is shown in FIG.1.

An overhang is present in case only a part of the layer is supported by a lower arranged layer. The angle is a difference angle with respect to the horizontal direction (indicated as arrow A in FIG. 1). That means that the smaller the angle is, the stronger the overhang is. The angle at the position x is about 90 degrees with respect to the horizontal direction A. The angle at the position y is about 0 degrees with respect to the horizontal direction A.

Objects and geometries which having a stronger overhang cannot be printed by the filament based 3D printing method without using additional support structures. The support structures need to be removed manually after printing, which results in additional material consumption and labour time.

The test object has the following dimensions:

x = 60.6 mm (Width)
y = 14.0 mm (Depth)
z = 44.0 mm (Hight)

In the control software of the Ultimaker the following control parameters were used to form the test object:

Nozzle: 0.4 mm
Layer height: 0.1 mm
Line Width: 0.35 mm
Wall Thickness: 1.05 mm
Top/Bottom Thickness: 0.8 mm
Top/Bottom Pattern: Lines
Top/Bottom Line Directions: [45°, 135°]
Infill Density: 100%
Infill Line Distance: 0.35 mm
Infill Pattern: Lines
Infill Line Directions: [45°; 135°]
Infill Overlap Percentage: 0%
Skin Overlap Percentage: 5%
Enable Retraction: Yes
Print Speed: 60 mm/s or 120 mm/s
Travel Speed: 120 mm/s
Enable Print Cooling: Yes
Fan Speed: 100%

**Assessment of the surface quality**

To assess the test result for each test object of each example the surface quality (overhang surface and adjoining side surfaces of the overhang surface) were assessed at the curved overhang surface. The angle, at which surface defects are observed, were determined for each object. Smaller angles provide the user space for more complex geometries without the need for adding (e.g. by printing) support structures.

Table 4: minimum overhang angle at several nozzle temperatures and printing speeds. The examples marked with "*" are comparison examples.

| Temperature | 190 °C | | 210 °C | | 230 °C | |
|---|---|---|---|---|---|---|
| Speed | 60 mm/s | 120 mm/s | 60 mm/s | 120 mm/s | 60 mm/s | 120 mm/s |
| Compound | | | | | | |
| 1* | not printable | > 70° | 65° | > 70° | 65° | 65° |
| 2* | > 70° | > 70° | 65° | >70° | 65° | 65° |
| 3* | not printable | not printable | 45° | not printable | 55° | 65° |
| 5* | not printable | not printable | 50° | 65° | 65° | 50° |
| 6 | not printable | not printable | 45° | 60° | 50° | 40° |

Table 4 shows that both the conventional PLA compositions of the supplier Natureworks (Ingeo 2003D (1*) and Ingeo 4043D (2*)) have a similar performance with respect to printability and surface quality along a range of nozzle temperatures. The example 6 (which is a talc based PLA composition) according to the invention shows, when compared to the comparison examples, clearly improved surface quality, especially a smaller overhang angle at several temperatures (210 °C / 230 °C) and print speeds (60 mm/s and 120 mm/s).

Table 5: minimum overhang angle at several nozzle temperatures and printing speeds.

| Temperature | | 210 °C | | 230 °C | |
|---|---|---|---|---|---|
| Speed | | 60 mm/s | 120 mm/s | 60 mm/s | 120 mm/s |
| Compound | Component ii) / Component iii) [wt %] / [wt %] | | | | |
| 1* | 0/0 | 65° | > 70° | 65° | 65° |
| 2* | 0/0 | 65° | >70° | 65° | 65° |
| 3* | 0/0 | 45° | not printable | 55° | 65° |
| 4* | 5.0/0 | 40° | 60° | 30° | 35° |
| 7* | 15.0/0 | 30° | 30° | 30° | 65° |
| 8 | 15.0 / 18.2 | 25° | 25° | 25° | 25° |

The examples marked with "*" are comparison examples.

Table 5 shows that the example 8 according to the invention, which comprises 15.0 wt % Garamite 1958 and BYK-LP T 23370, provide proper surface quality at smaller overhang angles compared to the comparison example 7* (having 15.0 wt %) and comparison example 4* (having 5.0 wt %).

Both at several temperatures (210 °C / 230 °C) and at several print speeds (60 mm/s and 120 mm/s) the broadened overhang angle range is obtained.

The comparison examples 4 and 7 show that, when no grafted polylactic acid is used, an increase of amount Garamite (from 5.0 wt % to 15.0 wt %) for objects being shaped at a nozzle temperature 230 °C even negatively effects the attainable overhang angle (climbs from 35° to 65°).

However, the example according to the present invention demonstrate that, while using the BYK-LP T 23370, the overhang angle range is consistently broadened (to overhang angles of 25°) when using the 15.0% by weight of the Garamite 1958.

**Test object preparation for the mechanical tests**

According to the ISO 178 method, a test sample was prepared for the determination of Flexural Modulus and Flexural Strength. The test sample has the following dimensions:

Length: 80 mm
Width, b: 10 mm
Thickness, h: 4 mm

For the determination of the Tensile Strength a test sample of Type 1BA was printed having the dimensions according to ISO-527-2. The dimensions of the test sample Type 1BA are shown in FIG. 2, wherein:

The total length $l_3$ of the test samples is 75 mm
The length $l_1$ of narrow parallel-sided portion is $30 \pm 0.5$ mm
The radius r is > 30 mm
The distance $l_2$ between broad parallel-sided portions is $58 \pm 2$ mm
The width $b_2$ at ends is $10 \pm 0.5$ mm
The width $b_1$ of narrow portion is $5 \pm 0.5$ mm
The thickness h is $\geq 2$ mm
The Gauge length $L_0$ is $25 \pm 0.5$ mm

The initial distance L between grips is $l_2 {}^{+2}_{\ 0}$

The test samples were printed on the filament 3D printer Ultimaker 2+ supplied by the company Ultimaker B.V.using the same conditions as for the overhang test sample. The following conditions were fixed:

Print speed: 60 mm/s
Nozzle Temperature: 210 °C

The width and length of the test samples were oriented in the horizontal plane of the Ultimaker 2+ printer during printing of the test samples. The thickness of the test samples is oriented in the vertical direction.
The test samples were conditioned after preparation of the test samples according to ISO-291 conditions (23 °C / 50% R.H.) up to the testing of the mechanical properties.

**Test sample prepared by Injection Molding**

Additionally, several test samples of Type 1BA were prepared using a conventional injection molding process for the compositions according to Comparison Examples 1*, 4*, 9*, 11* and 7* and according to examples 8, 10, and 12 of the present invention. Granulates of the compositions were used to prepare the test samples.
The test samples have the same dimensions according to ISO-527-2 as for the test samples prepared using a micro injection molding machine (Christmann Kunststofftechnik GmbH). The following parameters were used for forming the test samples in the injection molding:

Temperature plasticizing unit: 200°C
Temperature crosshead: 195°C
Nozzle temperature: 190°C
Plasticizing speed: 30%
Injection pressure first nozzle: 35 bar
Injection pressure second nozzle: 15 bar
Injection speed: 39%
Ejection pressure: 50 bar

**Assessment of the mechanical properties**

Tensile properties

The Tensile properties of the test sample 1BA were determined using a Tensile test machine (Zwick 1465, supplied by Zwick/ Roell). To determine the force a 1kN-load cell was used. The bias was 3 N and the speed of elongation was 5 mm/min. The tests were performed using normalized environment according to ISO-291 conditions (23 °C / 50% R.H.).

Flexural properties

The Flexural properties were determined according to ISO-178. Also the test machine (Zwick 1465, supplied by Zwick/ Roell) was used for this test. The test sample was tested using a bias of 0.1 MPA and a bridging gap of 64 mm between the support positions. The speed for determining the Flexural modulus and the Flexural Strength was 2 mm/min. The tests were performed using normalized environment according to ISO-291 conditions (23 °C / 50% R.H.).

The results below show that the filaments according to the present invention provide significant improvements of mechanical properties of the objects, which are prepared using the Ultimaker 2+ filament 3D printer.

Table 6 shows the Tensile properties of the PLA-compositions according to the comparison examples (Examples 1*, 4*, 7*, 9*, and 11*) and according to examples of the present invention (examples 10, 12 and 8).

Table 6: Tensile strength of PLA-compositions printed with the filament 3D printer or shaped using injection molding. The examples marked with "*" are comparison examples.

| | Component ii) / Component iii) | **3D printed sample** | **Injection Molded sample** |
|---|---|---|---|
| Compound | [wt %] / [wt %] | Tensile Strength [MPa] | Tensile Strength [MPa] |
| 1* | 0/0 | 53.9 | 63.9 |
| 4* | 5.0/0 | 59.9 | 64.7 |
| 9* | 7.5/0 | 62.0 | 66.6 |
| 10 | 7.5 / 15.0 | 65.4 | 68.9 |
| 11* | 10.0/0 | 59.4 | 66.0 |
| 12 | 10.0/ 20.0 | 70.3 | 71.7 |
| 7* | 15.0/0 | 58.8 | 63.8 |
| 8 | 15.0/ 30.0 | 69.7 | 66.0 |

The results in Table 6 show that for the conventional PLA composition 1* (Ingeo 2003D) the tensile strength of the 3D printed sample is considerably lower than the tensile strength of the sample prepared by injection molding.

Injection Molding

The comparison examples (4*, 9*, 11* and 7*) show that, in case of using injection molding to shape the object, an amount of 5.0%, 7.5% or 10.0% by weight of Garamite 1958 does only slightly improve the tensile strength (from 63.9 MPa up for Example 1* up to 66.6 MPa for 7.5% of Example 9*).

The examples according to the invention (10, 12, 8) demonstrate that, in case of using injection molding to shape the object, the addition of the grafted PLA to the composition increases the tensile strength. In particular, the examples 10, 12 and 8 indicate that an amount higher than 7.5% and lower than 15.0% by weight Garamite (preferably 10.0% by weight of Garamite and 20.0% by weight of BYK-LP T 23370) results in an optimum tensile strength.

3D printing

The comparison examples (4*, 9*, 11* and 7*) show that, in case of using 3D printing to shape the object, an amount of 5.0%, 7.5% or 10.0% by weight of Garamite 1958 improves the tensile strength (from 53.9 MPa up for Example 1* up to 62.0 MPa for 7.5 wt% of Example 9*).

The examples according to the invention having at least 7.5 wt% of Garamite 1958 (Examples 10, 12, 8) demonstrate that, in case of using 3D printing to shape the object, the addition of the grafted PLA to the composition strongly increases the tensile strength up to a level substantially equal to (or even higher than) the tensile strength of objects made by injection molding (using the same composition). In particular, the Example 12 indicates that an amount of at least 10.0% by weight of Garamite (and at least 20.0% by weight of grafted PLA) results in an optimum tensile strength of about 70 MPa. This level is higher than for objects of comparison Example 11*, both in case of being prepared by 3D printing and in case of being prepared by injection molding. Additionally, the Example 8 indicates that an amount of 15.0% by weight of Garamite and 30% by weight of grafted PLA results in the tensile strength of 69.7 MPa, which is only slightly less than for Example 12. This level is considerably higher than for objects of comparison Example 7*, both in case of being prepared by 3D printing and in case of being prepared by injection molding.

Table 7 shows the flexural strength and flexural modulus of the PLA-compositions comprising Garamite 1958 according to the comparison examples (Examples 1*, 4*, and 9*) and according to an example of the present invention (Example 10).

Table 7: Flexural strength and flexural modulus of PLA-compositions printed with the filament 3D printer. The examples marked with "*" are comparison examples.

| Compound | Flexural Strength [MPa] | Flexural Modulus [MPa] |
| --- | --- | --- |
| 1* | 66.0 | 2700 |
| 4* | 85.6 | 3860 |
| 9* | 92.1 | 4300 |
| 10 | 112.0 | 4930 |

The Example 4* and 9* comprise 5.0% respectively 7.5 % by weight Garamite 1958. The Example 10 of the present invention comprise 7.5% by weight Garamite 1958 and additionally 15.0% by weight of BYK-LP T 23370.

The Examples 4* and 9* show the effect of an increasing amount of Garamite 1958: The flexural strength and flexural modulus are strongly increased upon increasing the amount of Garamite 1958 from 5.0% by weight to 7.5% by weight. Example 10 shows the effect of the addition of BYK-LP T 23370 for a composition having 7.5% by weight of Garamite 1958. Flexural modulus and flexural strength are increased by almost 20% compared to the comparative example 9*.

Thus, by adding grafted PLA (e.g. BYK-LP T 23370) to a Garamite 1958-based PLA composition the flexural properties can be strongly improved.

Table 8 shows the flexural properties and the tensile strength of the PLA-compositions comprising Luzenac 1445 according to the comparison examples (Examples 1* and 5*) and according to an example of the present invention (Examples 6 and 14).

Table 8: Flexural properties and Tensile Strength of PLA-compositions printed with the filament 3D printer. The examples marked with "*" are comparison examples.

| Compound | Flexural Strength [MPa] | Flexural Modulus [MPa] | Tensile Strength [MPa] |
| --- | --- | --- | --- |
| 1* | 66.0 | 2700 | 53.9 |
| 5* | 70.5 | 3890 | 50.7 |
| 6 | 89.6 | 5320 | 52.5 |
| 14 | 90.8 | 5210 | 59.3 |

The Examples 5*, 6 and 14 comprise 15% by weight Luzenac 1445. The Example 6 additionally comprises 18.2% by weight of grafted PLA and the Example 14 additionally comprises 30.0% by weight of grafted PLA.

The table 8 shows the effect of the addition of the grafted PLA for a composition having 15.0% by weight of Luzenac 1445 as the flexural strength and the flexural modulus have been strongly increased, when compared to the comparison Examples 1* and 5*.

The Examples 5* and 6 show that the addition of (only) Luzenac 1445 decreases the tensile strength compared to Example 1*, while the addition of Luzenac 1445 and BYK-LP T 23370 (example 6) enhances the tensile strength to a level close to the comparison Example 1*. Additionally, the Example 14 shows the effect of amount of grafted PLA: the tensile strength is increased further to a much higher level of 59.3 MPa for the amount of 30.0% by weight for the grafted PLA compared to Example 6 (having 18.2% by weight grafted PLA).

Thus, by adding grafted PLA to a talc-based PLA composition the flexural properties can be improved and at the same time the tensile strength can be improved.

Furthermore, when comparing the results of Table 8 for the Talc-based PLA compositions (Luzenac 1445) with the results of Table 6 for the Garamite based PLA compositions (Garamite 1958) it is shown, that the Garamite based PLA-compositions according to the present invention, which contain grafted PLA, considerably enhance the Tensile Strength (up to 70 - 71 MPa) compared to the Talc-based PLA compositions (Luzenac 1445) (i.e. 59.3 MPa).

**Claims**

1. A polylactic acid composition comprising:

   i) polylactic acid,
   ii) mineral silicate compound, and
   iii) polylactic acid grafted with an acid- and/or acid anhydride-functional ethylenically unsaturated polymerizable monomer,

   wherein the composition comprises at least 7.5 % by weight of the mineral silicate compound component ii), wherein the % by weight is calculated on the sum of i), ii) and iii).

2. The composition according to claim 1, wherein component ii) comprises an organically modified layered silicate.

3. The composition according to claim 1 or 2, wherein component ii) comprises a layered silicate and another mineral silicate, which has a shape selected from the group consisting of a needle shape and a spherical shape.

4. The composition according to any one of the preceding claims, wherein component ii) comprises a mixture of

   iia) smectite and
   iib) a mineral silicate selected from sepiolite, palygorskite, and mixtures thereof.

5. The composition according to any one of the preceding claims, wherein the composition comprises at least 15.0% by weight of component iii), wherein the % by weight is calculated on the sum of i), ii) and iii).

6. The composition according to any one of the preceding claims, wherein the composition comprises at least 10.0% by weight of the mineral silicate compound component ii), wherein the % by weight is calculated on the sum of i), ii) and iii).

7. The composition according to any one of the preceding claims, wherein the composition comprises at least 20.0% by weight of component iii), wherein the % by weight is calculated on the sum of i), ii) and iii).

8. The composition according to any one of the preceding claims, wherein the composition comprises at least 30.0 % by weight of component iii), wherein the % by weight is calculated on the sum of i), ii) and iii).

9. The composition according to any one of the preceding claims 2 - 8, wherein the organically modified layered silicate comprises a clay mineral modified with an organic compound selected from organic amines, salts of organic amines, quaternary ammonium compounds, and mixtures thereof.

10. The composition according to any one of the preceding claims, wherein component iii) comprises polylactic acid grafted with one or more of maleic anhydride, maleic acid, maleic acid monoester, itaconic anhydride, itaconic acid, citraconic anhydride, citraconic acid, acrylic acid, methacrylic acid, and fumaric acid.

11. The composition according to any one of the preceding claims, wherein the composition comprises one or more further components selected from pigments, dyes, fillers, plasticizers, impact modifiers, nucleation agents, flame retardants, anti-oxidants, UV-stabilizers, and processing aids.

12. The composition according to any one of the preceding claims, wherein the composition comprises

    i) 40.0 to 91.5 % by weight of polylactic acid, and

ii) 7.5 to 20.0 % by weight of mineral silicate compound

iii) 1.0 to 40.0 % by weight of polylactic acid grafted with an acid- and/or acid anhydride-functional ethylenically unsaturated polymerizable monomer,

wherein the % by weight are calculated on the sum of i), ii) and iii).

**13.** Use of a polylactic acid composition according to any one of the preceding claims as a building material in additive manufacturing of three-dimensional shaped objects.

**14.** A three-dimensional shaped object prepared from a polylactic acid composition according to any one of the preceding claims 1 - 11.


**Patentansprüche**

**1.** Polymilchsäurezusammensetzung, umfassend:

i) Polymilchsäure,
ii) Mineralsilikatverbindung und
iii) Polymilchsäure, die mit säure- und/oder säureanhydridfunktionellem, ethylenisch ungesättigtem, polymerisierbarem Monomer gepfropft ist,

wobei die Zusammensetzung mindestens 7,5 Gew.% der Mineralsilikatverbindung Komponente ii) umfasst, wobei die Gewichtsprozent basierend auf der Summe von i), ii) und iii) berechnet werden.

**2.** Zusammensetzung nach Anspruch 1, wobei Komponente ii) ein organisch modifiziertes geschichtetes Silikat umfasst.

**3.** Zusammensetzung nach Anspruch 1 oder 2, wobei Komponente ii) ein geschichtetes Silikat und ein anderes Mineralsilikat umfasst, das eine Form ausgewählt aus der Gruppe bestehend aus einer Nadelform und einer Kugelform hat.

**4.** Zusammensetzung nach einem der vorhergehenden Ansprüche, wobei Komponente (ii) eine Mischung aus

iia) Smektit und
iib) einem Mineralsilikat ausgewählt aus Sepiolit, Palygorskit und Mischungen davon umfasst.

**5.** Zusammensetzung nach einem der vorhergehenden Ansprüche, wobei die Zusammensetzung mindestens 15,0 Gew.-% von Komponente iii) umfasst, wobei die Gewichtsprozent bezogen auf die Summe von i), ii) und iii) berechnet werden.

**6.** Zusammensetzung nach einem der vorhergehenden Ansprüche, wobei die Zusammensetzung mindestens 10,0 Gew.-% der Mineralsilikatverbindung Komponente ii) umfasst, wobei die Gewichtsprozent bezogen auf die Summe von i), ii) und iii) berechnet werden.

**7.** Zusammensetzung nach einem der vorhergehenden Ansprüche, wobei die Zusammensetzung mindestens 20,0 Gew.-% von Komponente iii) umfasst, wobei die Gewichtsprozent bezogen auf die Summe von i), ii) und iii) berechnet werden.

**8.** Zusammensetzung nach einem der vorhergehenden Ansprüche, wobei die Zusammensetzung mindestens 30,0 Gew.-% von Komponente iii) umfasst, wobei die Gewichtsprozent bezogen auf die Summe von i), ii) und iii) berechnet werden.

**9.** Zusammensetzung nach einem der vorhergehenden Ansprüche 2 bis 8, wobei das organisch modifizierte geschichtete Silikat ein Tonmineral umfasst, das mit einer organischen Verbindung ausgewählt aus organischen Aminen, Salzen von organischen Aminen, quaternären Ammoniumverbindungen und Mischungen davon modifiziert ist.

**10.** Zusammensetzung nach einem der vorhergehenden Ansprüche, wobei Komponente iii) Polymilchsäure umfasst, die mit einem oder mehreren von Maleinsäureanhydrid, Maleinsäure, Maleinsäuremonoester, Itaconsäureanhydrid, Itaconsäure, Citraconsäureanhydrid, Citraconsäure, Acrylsäure, Methacrylsäure und Fumarsäure gepfropft ist.

11. Zusammensetzung nach einem der vorhergehenden Ansprüche, wobei die Zusammensetzung ein oder mehrere weitere Komponenten ausgewählt aus Pigmenten, Farbstoffen, Füllstoffen, Plastifizierungsmitteln, Schlagzähmachern, Nukleierungsmitteln, Flammschutzmitteln, Antioxidantien, UV-Stabilisatoren und Verarbeitungshilfsmitteln umfasst.

12. Zusammensetzung nach einem der vorhergehenden Ansprüche, wobei die Zusammensetzung umfasst:

i) 40,0 bis 91,5 Gew.-% Polymilchsäure und
ii) 7,5 bis 20,0 Gew.-% Mineralsilikatverbindung
iii) 1,0 bis 40,0 Gew.-% Polymilchsäure, die mit säure- und/oder säureanhydridfunktionellem, ethylenisch ungesättigtem, polymerisierbarem Monomer gepfropft ist,

wobei die Gewichtsprozent bezogen auf die Summe von i), ii) und iii) berechnet werden.

13. Verwendung einer Polymilchsäurezusammensetzung nach einem der vorhergehenden Ansprüche als Baumaterial in der additiven Fertigung von dreidimensionalen geformten Objekten.

14. Dreidimensionales geformtes Objekt, das aus einer Polymilchsäurezusammensetzung nach einem der vorhergehenden Ansprüche 1 bis 11 hergestellt ist.

**Revendications**

1. Composition de poly(acide lactique) comprenant :

i) un poly(acide lactique),
ii) un composé de type silicate minéral, et
iii) un poly(acide lactique) greffé avec un monomère polymérisable éthyléniquement insaturé fonctionnalisé par acide et/ou anhydride d'acide, la composition comprenant au moins 7,5 % en poids du composant ii) de type composé de type silicate minéral, le % en poids étant calculé sur la somme de i), ii) et iii).

2. Composition selon la revendication 1, le composant ii) comprenant un silicate stratifié modifié de manière organique.

3. Composition selon la revendication 1 ou 2, le composant ii) comprenant un silicate stratifié et un autre silicate minéral, qui possède une forme choisie dans le groupe constitué par une forme d'aiguille et une forme sphérique.

4. Composition selon l'une quelconque des revendications précédentes, le composant ii) comprenant un mélange de

iia) smectite et
iib) un silicate minéral choisi parmi la sépiolite, la palygorskite et des mélanges correspondants.

5. Composition selon l'une quelconque des revendications précédentes, la composition comprenant au moins 15,0 % en poids de composant iii), le % en poids étant calculé sur la somme de i), ii) et iii).

6. Composition selon l'une quelconque des revendications précédentes, la composition comprenant au moins 10,0 % en poids du composant ii) de type composé de type silicate minéral, le % en poids étant calculé sur la somme de i), ii) et iii).

7. Composition selon l'une quelconque des revendications précédentes, la composition comprenant au moins 20,0 % en poids de composant iii), le % en poids étant calculé sur la somme de i), ii) et iii).

8. Composition selon l'une quelconque des revendications précédentes, la composition comprenant au moins 30,0 % en poids de composant iii), le % en poids étant calculé sur la somme de i), ii) et iii).

9. Composition selon l'une quelconque des revendications précédentes 2 à 8, le silicate stratifié modifié de manière organique comprenant un minéral de type argile modifié par un composé organique choisi parmi des amines organiques, des sels d'amines organiques, des composés de type ammonium quaternaire et des mélanges correspondants.

10. Composition selon l'une quelconque des revendications précédentes, le composant iii) comprenant un poly(acide lactique) greffé avec l'un ou plusieurs parmi l'anhydride maléique, l'acide maléique, un monoester d'acide maléique, l'anhydride itaconique, l'acide itaconique, l'anhydride citraconique, l'acide citraconique, l'acide acrylique, l'acide méthacrylique et l'acide fumarique.

11. Composition selon l'une quelconque des revendications précédentes, la composition comprenant un ou plusieurs composants supplémentaires choisis parmi des pigments, des colorants, des charges, des plastifiants, des modificateurs d'impact, des agents de nucléation, des retardateurs de flamme, des antioxydants, des stabilisants UV et des auxiliaires de traitement.

12. Composition selon l'une quelconque des revendications précédentes, la composition comprenant

i) 40,0 à 91,5 % en poids de poly(acide lactique), et
ii) 7,5 à 20,0 % en poids d'un composé de type silicate minéral
iii) 1,0 à 40,0 % en poids de poly(acide lactique) greffé avec un monomère polymérisable éthyléniquement insaturé fonctionnalisé par acide et/ou anhydride d'acide,

les % en poids étant calculés sur la somme de i), ii) et iii).

13. Utilisation d'une composition de poly(acide lactique) selon l'une quelconque des revendications précédentes en tant que matériau de construction dans la fabrication additive d'objets façonnés tridimensionnels.

14. Objet façonné tridimensionnel préparé à partir d'une composition de poly(acide lactique) selon l'une quelconque des revendications précédentes 1 à 11.

FIG. 1

FIG. 2

**EP 3 794 072 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *Journal of Applied Polymer Science,* 2006, vol. 102 (2), 1852-1862